# EUROPEAN PATENT APPLICATION

(11) **EP 3 988 345 A1**
(43) Date of publication of application: **27.04.2022**
(21) Application number: 20825678.4
(22) Date of filing: 10.06.2020
(51) Int. Cl.: B60C 15/06, B60C 15/04

(54) **TIRE**

(30) Priority: 18.06.2019 JP 2019112960
(71) Applicant: BRIDGESTONE CORPORATION, Chuo-ku Tokyo 104-8340 (JP)
(72) Inventor: HASEGAWA, Keiichi, Chuo-ku Tokyo 104-8340 (JP); ARIMA, Masayuki, Chuo-ku Tokyo 104-8340 (JP)
(74) Representative: Oxley, Robin John George
(86) International application number: PCT/JP2020/022891
(87) International publication number: WO 2020/255831

(57) **Abstract**

The tire has s bead structure (61) including a bead core portion (62) having a cord unit (63) and a bead filler portion (69) continuous to the bead core portion (62) in the tire radial direction outside of the bead core portion (62) and formed of a resin material. The bead filler portion (69) has a tip portion (69 a) which becomes thinner toward outside in the tire radial direction. The tip portion (69 a) is positioned inside in the tire width direction inside than a straight line (L1) passing through a center (62 a) in the width direction at an inside end in the tire radial direction of the bead core portion (62) and passing through a center (62 b) in the width direction at outside end in the tire radial direction of the bead core portion (62).

## Description

### [Technical Field]

The present invention relates to a tire in which a bead portion is formed of a resin material.

### [Background Art]

Conventionally, a tire in which a resin is filled in a void portion of a bead core is known (see Patent Literature 1).

Thus, the amount of the bead cord made of metal can be reduced, so that the weight of the tire can be reduced.

### [Citation List]

### [Patent Literature]

[PTL 1] Japanese Unexamined Patent Application Publication No. 2002-187414

### [Summary of Invention]

As described above, the weight reduction of the tire can be achieved by replacing part of the constituting member of the tire with a resin from a metal (or rubber), but on the other hand, there are the following problems.

For example, it is conceivable to use a resin bead structure integrated with a filler in which a bead core having a bead cord coated with a resin material and a resin bead filler are integrally molded.

However, such a resin bead structure has higher rigidity than a conventional bead core and bead filler mainly formed of rubber, and is hardly deformed even when vulcanizing a green tire.

Therefore, the resin bead structure cannot follow the deformation of a member mainly formed of rubber such as a carcass ply, and air is easily caught in the gap between the resin bead structure and the other member, thereby deteriorating the yield.

Accordingly, an object of the present invention is to provide a tire using a resin bead structure in which a bead core having a bead cord coated with a resin and a resin bead filler are integrally molded without deteriorating the yield.

One aspect of the present invention is a tire including a tread portion in contact with the road surface, a tire side portion continuous to the tread portion and positioned inside in a tire radial direction of the tread portion, a bead portion continuous to the tire side portion and positioned inside in the tire radial direction of the tire side portion, and a carcass ply forming the skeleton of the tire. The bead portion comprises a bead structure having a bead core portion having a bead cord, and a bead filler portion continuous to the bead core portion in the tire radial direction outside of the bead core and formed of a resin material. The bead filler portion has a tip portion which becomes thinner toward outside in the tire radial direction, and the tip portion is positioned inside in a tire width direction than a straight line passing through the center in a width direction at an inside end in the tire radial direction of the bead core portion and passing through the center in the width direction at an outside end in the tire radial direction of the bead core portion.

### [Brief Description of Drawings]

FIG. 1 is a cross-sectional view of a pneumatic tire 10.
FIG. 2 is a partially enlarged cross-sectional view of the pneumatic tire 10.
FIG. 3 is a cross-sectional view of a sole bead structure 61.
FIG. 4 is a diagram schematically illustrating a process for manufacturing the pneumatic tire 10.
FIG. 5 is a cross-sectional view of a sole bead structure 61 X.

### [Description of Embodiments]

Embodiments will be described below with reference to the drawings. The same functions and configurations are denoted by the same or similar reference numerals, and descriptions thereof are omitted as appropriate.

### (1)Overall schematic configuration of the tire

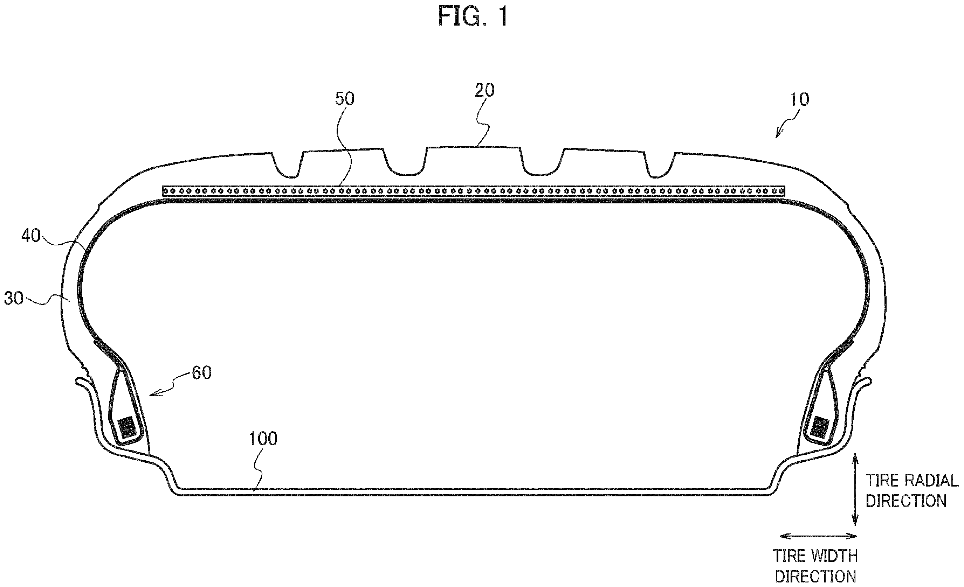

FIG. 1 is a cross-sectional view of the pneumatic tire 10 according to the present embodiment. Specifically, FIG. 1 is a cross-sectional view of the pneumatic tire 10 along the tire width direction and the tire radial direction . In FIG. 1, the sectional hatching is not shown (hereinafter the same).

As shown in FIG. 1, the pneumatic tire 10 includes a tread portion 20, a tire side portion 30, a carcass ply 40, a belt layer 50 and a bead portion 60.

The tread portion 20 is a part in contact with a road surface (not shown). On the tread portion 20, a pattern (not shown) corresponding to the use environment of the pneumatic tire 10 and the type of vehicle to be mounted is formed.

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

The carcass ply 40 forms a skeleton (tire skeleton) of the pneumatic tire 10. The carcass ply 40 has a radial structure in which a carcass cord (not shown) arranged radially along a tire radial direction is covered with a rubber material. However, the present invention is not limited to a radial structure, and a bias structure in which the carcass cords are arranged so as to cross each other in the tire radial direction.

The carcass cord is not particularly limited, and may be formed of an organic fiber cord in the same manner as a tire for a standard passenger car (including minivans and SUV (Sport Utility Vehicles)).

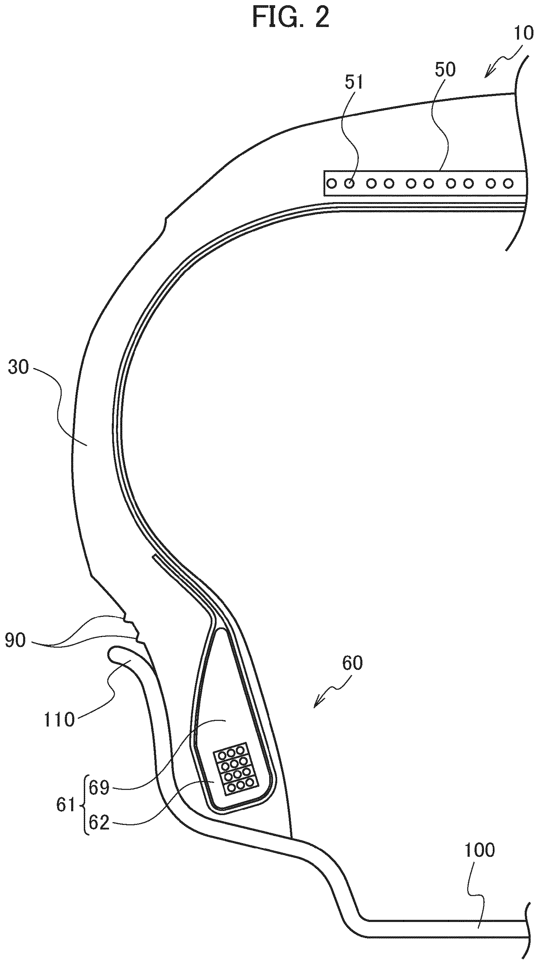

The belt layer 50 is provided inside the tire radial direction of the tread portion 20. The belt layer 50 has a reinforcing cord 51 (see also FIG. 2), and the reinforcing cord 51 is a single-layer spiral belt covered with a resin material. However, the belt layer 50 is not limited to a single-layer spiral belt. For example, the belt layer 50 may be a 2 layer crossing belt coated with rubber.

The reinforcing cord 51 can be composed of a monofilament (single wire) such as a metal fiber or an organic fiber or a multifilament (stranded wire) obtained by twisting these fibers. In this embodiment, a steel cord may be used as the reinforcing cord 51.

As the resin for covering the reinforcing cord 51, a resin material having a higher tensile elastic modulus than the tensile elastic modulus of the rubber material constituting the tire side portion 30 and the rubber material constituting the tread portion 20 are used. As the resin for covering the reinforcing cord 51, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), and the like.

Examples of the thermoplastic resin include polyurethane resin, polyolefin resin, vinyl chloride resin, polyamide resin, and the like. Further, as the thermoplastic resin material, for example, a material having a deflection temperature under load (At 0.45 MPa Load) specified in ISO 75 -2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more can be used.

The bead portion 60 continues to tire side portion 30 and is positioned inside in tire radial direction of tire side portion 30. The bead portion 60 is an annular shape extending to the tire circumferential direction.

A part of the bead portion 60 is made of a resin material. In this embodiment, the part of the bead portion 60 is formed of the same resin material as that used for the belt layer 50.

The bead portion 60 is locked to a flange portion 110 (not shown in FIG. 1, see FIG. 2) formed at the radially outside end of the rim wheel 100.

An inner liner (not shown) for preventing leakage of air (or a gas such as nitrogen) filled in the internal space of the pneumatic tire 10 assembled to the rim wheel 100 is stuck to the tire inner surface of the pneumatic tire 10.

### (2)Schematic configuration of bead portion

FIG. 2 is a partially enlarged cross-sectional view of the pneumatic tire 10. Specifically, FIG. 2 is a partially enlarged cross-sectional view including the bead portion 60 along the tire width direction and tire radial direction of the pneumatic tire 10.

As shown in FIG. 2, the carcass ply 40 is folded back to outside in the tire width direction via bead portion 60. Specifically, the carcass ply 40 includes a body portion 41 and a folded portion 42.

The body portion 41 is provided over the tread portion 20, the tire side portion 30 and the bead portion 60, and the body portion 41 is a portion until it is folded back at a bead core portion 62 of the bead portion 60.

The folded portion 42 is continuous to the body portion 41, and the folded portion 42 is a portion where it is folded back to outside in the tire width direction via the bead core portion 62.

The bead portion 60 has a bead structure 61. In this embodiment, the bead structure 61 is a structure in which the bead core portion 62 (including the peripheral portion of a cord unit 63) and a bead filler portion 69 are integrally formed. That is, the bead portion 60 has the bead core portion 62 and the bead filler portion 69.

The bead core portion 62 and the bead filler portion 69 may not necessarily be formed integrally with each other before the pneumatic tire 10 is manufactured. In other words, the bead core portion 62 and the bead filler portion 69, which are separate bodies made of resin, may be bonded and integrated at the time of manufacturing.

A rim line 90 is provided on the outer side face in the tire width direction of the bead portion 60. The rim line 90 is a projection formed along the tire circumferential direction in order to confirm that the bead portion 60 is correctly mounted on a rim wheel 100. In this embodiment, the rim line 90 is provided outside in the tire radial direction about 6 mm from the end portion of the tire radial direction of a flange portion 110.

In this embodiment, an outside end in the tire radial direction of the bead filler portion 69 is positioned inside in the tire radial direction than an outside end in the tire radial direction of the rim line 90 and the flange portion 110.

An outside end in the tire radial direction of the folded portion 42 is positioned outside in the tire radial direction than an outside end in the tire radial direction of the rim line 90 and the flange portion 110 and extends to the tire side portion 30.

### (3)Detailed configuration of bead portion

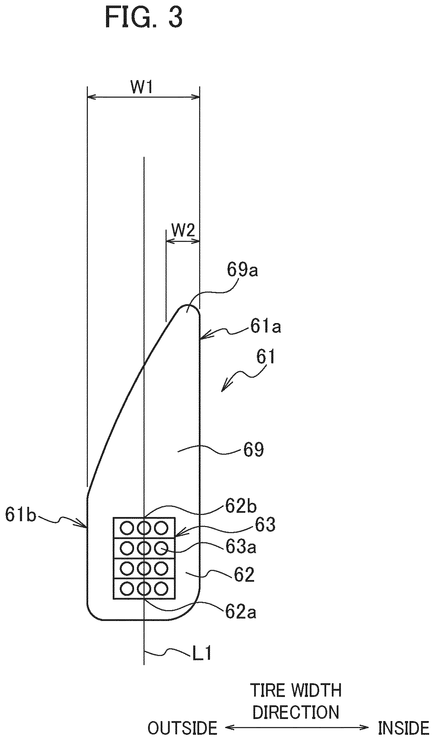

FIG. 3 is a cross-sectional view of the sole bead structure 61. Specifically, FIG. 3 is an enlarged cross-sectional view of the bead structure 61 along the tire width direction and the tire radial direction of the pneumatic tire 10. As shown in FIG. 3, the bead structure 61 includes the bead core portion 62 and the bead filler portion 69.

The bead core portion 62 includes the cord unit 63. The cord unit 63 includes a plurality of bead cords 63 a. The bead cord 63 a is formed of a metal material such as steel. The cord unit 63 is formed by covering the bead cord 63 a with a resin material. In other words, the bead core portion 62 is formed by covering the bead cord 63 a with a resin material.

In this embodiment, the bead cord 63 a is provided to have a configuration of 4 x 3 (tire radial direction x tire width direction). The bead cords 63 a are not particularly twisted, and the bead cords 63 a formed by bundling one or a plurality of cords (for example, three along the tire width direction.) are wound around the tire circumferential direction a plurality of times.

The bead core portion 62 and the bead filler portion 69 are integrally formed by using a resin material. Specifically, the bead core portion 62 (excluding the bead cord 63 a) and the bead filler portion 69 are formed by using a resin material. As the resin material, the same resin material as that used for the belt layer 50 can be used.

However, the bead core portion 62 and the bead filler portion 69 may not necessarily be formed of the same resin material as that used for the belt layer 50. In other words, as long as the above-mentioned resin material can be used for the belt layer 50, the resin material used for the belt layer 50, the bead core portion 62 and the bead filler portion 69 may be different.

The bead filler portion 69 has a tip portion 69 a that tapers toward outside in the tire radial direction . The bead filler portion 69 becomes thinner toward the tip portion 69 a so as to fill the gap between the body portion 41 and the folded portion 42 of the carcass ply 40. The bead filler portion 69 may be tapered toward the tip portion 69 a in the sectional view along the tire width direction and tire radial direction.

The tip portion 69 a is the apex portion of the bead filler portion 69. The tip portion 69 a is offset inside in the tire width direction from the center of the bead structure 61 in the width direction (which may be substantially in the tire width direction).

Specifically, the tip portion 69 a is positioned inside in a tire width direction than a straight line L1 passing through the center 62 a in a width direction at an inside end in the tire radial direction of the bead core portion 62 (herein, it means the cord unit 63) and passing through the center 62 b in the width direction at an outside end in the tire radial direction of the bead core portion 62.

Further, in the present embodiment, the tip portion 69 a is positioned in an area from an inside end 61 a in the tire width direction of the bead structure 61 to 30% of the overall width (width W1 in the figure) up to an outside end 61 b in the tire width direction of the bead structure 61. Specifically, the tip portion 69 a is positioned within the range of the width W2. The width W2 is based on the inside end 61 a.

### (4)Outline of manufacturing method of pneumatic tire 10

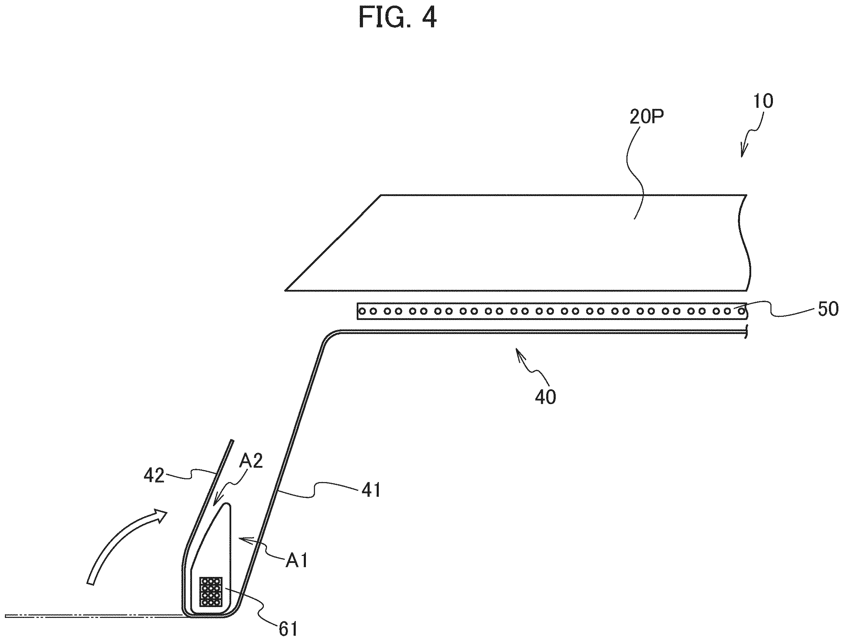

Next, an outline of the manufacturing method of the pneumatic tire 10 will be described. FIG. 4 schematically illustrates a manufacturing process of the pneumatic tire 10. Specifically, FIG. 4 shows a state in which an unvulcanized tread rubber 20 p, the carcass ply 40, the belt layer 50, and the bead structure 61 are arranged before vulcanization of the pneumatic tire 10.

The carcass ply 40 is folded back via the bead structure 61. The body portion 41 of the carcass ply 40 is positioned inside in the tire width direction of the bead structure 61. On the other hand, the folded portion 42 of the carcass ply 40 is positioned outside in the tire width direction of the bead structure 61.

The folded portion 42 is folded back from outside in the tire width direction toward inside in the tire width direction (see arrow in the figure), and the bead structure 61 is also brought close to the body portion 41. In this case, it has been found that air tends to remain in the region A1, which causes so-called air biting.

On the other hand, it is also known that air biting is less likely to occur in the region A2 than in the region A1. Therefore, in the present embodiment, as described above, the tip portion 69 a (see FIG. 3) of the bead filler portion 69 is offset inside in the tire width direction from the center in the width direction of the bead structure 61.

In particular, the bead structure 61 (excluding the portion of the cord unit 63), which is made of resin including the bead filler portion 69, is less likely to be softened in the vulcanization process than the rubber member and is less likely to change in shape. Therefore, compared with a bead structure such as a bead filler mainly made of a conventional rubber material, there is a problem that the followingness and adhesiveness to other rubber members such as the carcass ply 40 are low, and especially, air biting easily occurs.

In the present embodiment, the air biting is effectively suppressed by using bead structure 61 having the above-described shape.

### (5)Examples of other bead structure shapes

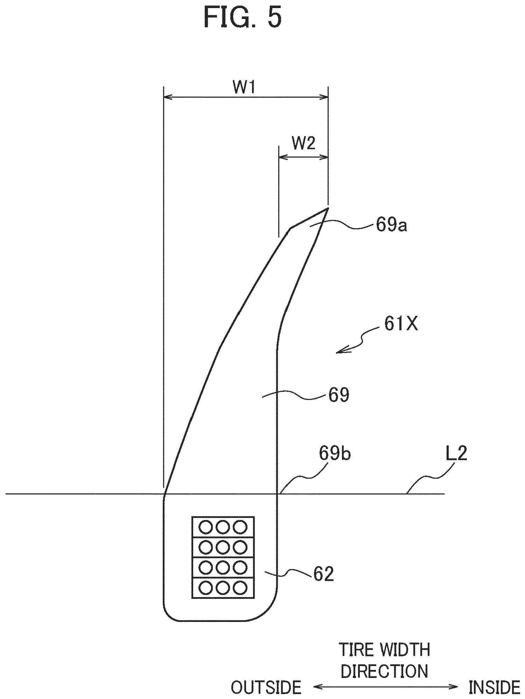

The shape of the bead structure 61 described above is an example, and may be as follows. FIG. 5 shows another configuration example of a bead structure. Specifically, FIG. 5 is a cross-sectional view of a sole bead structure 61 X.

The bead structure 61 X may also be used as an alternative to the bead structure 61, but the use of either the bead structure 61 or the bead structure 61 X may be suitably selected depending on the size of the pneumatic tire 10, aspect ratio, etc.

As shown in FIG. 5, also in the bead structure 61 X, the tip portion 69 a of the bead filler portion 69 is offset inside in the tire width direction from the center in the width direction of the bead structure 61 X.

In bead structure 61 X, the tip portion 69 a is further offset inside in the tire width direction. More specifically, the tip portion 69 a is positioned inside in the tire width direction than the inside end 69 b in the width direction of the bead filler portion 69 on the straight line L2 passing through an inside end in the tire radial direction of the bead filler portion 69.

The inside end in the tire radial direction of the bead filler portion 69 is the boundary between the bead core portion 62 and the bead filler portion 69 in case that the bead core portion 62 and the bead filler portion 69 are separate before manufacturing and the boundary is clear. Instead, when the bead core portion 62 and the bead filler portion 69 are integrally formed, the inside end may be a position where the width of the bead structure 61 X starts to narrow.

That is, the tip portion 69 a of the bead structure 61 X is positioned further inside in the tire width direction than the inside end in the tire width direction of the portion of the bead core portion 62. Since the bead filler portion 69 of bead structure 61 X has such a positional relationship of the tip portion 69 a, the cross-sectional shape of the bead structure 61 X is curved inside in the tire width direction.

Also in the bead structure 61 X, the tip portion 69 a is positioned in an area up to 30% of the width W1 of the bead structure 61 X (width W2 in the figure).

### (6)Function and effects

According to the above-described embodiment, the following effects can be obtained. Specifically, in the bead structure 61 and bead structure 61 X, the tip portion 69 a of the bead filler portion 69 is offset inside in the tire width direction from the center in the width direction of the bead structure.

Therefore, since the gap with the body portion 41 of the carcass ply 40 becomes narrow in the manufacturing process, air hardly remains in the region A1 (see FIG. 4) in the manufacturing process of the pneumatic tire 10 as described above. That is, air biting can be effectively prevented.

That is, a tire using the resin bead structure in which a bead core portion 62 (cord unit 63) in which a bead cord 63 a is coated with a resin and the resin bead filler portion 69 are integrally molded can be manufactured without deteriorating the yield.

In the present embodiment, as in the bead structure 61 X (see FIG. 5), the tip portion 69 a may be positioned inside in the tire width direction than the inside end 69 b in the width direction of the bead filler portion 69 on the straight line L2 passing through the inside end in the tire radial direction of the bead filler portion 69.

Therefore, an appropriate shape of the bead structure that can effectively suppress air biting can be suitably selected depending on the size or aspect ratio, etc. of the pneumatic tire 10. In particular, the bead structure 61 X is considered to be suitable for a low aspect ratio pneumatic tires.

In this embodiment, the tip portion 69 a is positioned in an area up to 30% of the width W1 of the bead structure 61 (or bead structure 61 X). Therefore, a proper offset of the tip portion 69 a which can suppress air biting can be provided.

In this embodiment, the bead core portion 62 (cord unit 63) is formed by covering the bead cord 63 a with a resin material. Thus, even when the bead core portion 62 in which the bead cord 63 a is resin-coated is used, air biting can be effectively suppressed, and the yield does not deteriorate.

### (7)Other Embodiments

Although the contents of the present invention have been described above in accordance with the embodiments, the present invention is not limited to these descriptions, and it is obvious to those skilled in the art that various modifications and improvements can be made.

For example, in the above-described embodiment, the cord unit 63 formed by covering the bead cord 63 a with a resin material is used for the bead core portion 62, but the bead cord 63 a may not be covered with a resin material. In this case, the bead cord may be formed of twisted wire.

In the above-described embodiment, the bead cord 63 a has a configuration of 4 x 3 (tire radial direction x tire width direction), but other configurations, for example, 3 x 3 or 4 x 4, may be used.

As noted above, embodiments of the invention have been described, but it should not be understood that the statements and drawings that make up part of this disclosure limit the invention. Various alternative embodiments, embodiments and operational techniques will become apparent to those skilled in the art from this disclosure.

### [Reference Signs List]

10 Pneumatic tires
20 Tread portion
20 p Tread rubber
30 Tire side portion
40 Carcass ply
41 Body portion
42 Folded portion
50 Belt layer
51 Reinforcement cord
60 Bead portion
61 Bead structure
61 a Inside end
61 b Outside End
61 x Bead structure
62 Bead core portion
62 a, 62 b Center
63 Cord unit
63 a Bead cord
69 Bead filler portion
69 a Tip portion
69 b Inside end
90 Rim line
100 Rim wheel
110 Flange portion

## Claims

1. A tire comprising:
a tread portion in contact with the road surface;
a tire side portion continuous to the tread portion and positioned inside in a tire radial direction of the tread portion;
a bead portion continuous to the tire side portion and positioned inside in the tire radial direction of the tire side portion; and
a carcass ply forming the skeleton of the tire, wherein
the bead portion comprises a bead structure having:
a bead core portion having a bead cord; and
a bead filler portion continuous to the bead core portion in the tire radial direction outside of the bead core and formed of a resin material, wherein
the bead filler portion has a tip portion which becomes thinner toward outside in the tire radial direction, and
the tip portion is positioned inside in a tire width direction than a straight line passing through the center in a width direction at an inside end in the tire radial direction of the bead core portion and passing through the center in the width direction at an outside end in the tire radial direction of the bead core portion.

2. The tire according to claim 1, wherein the tip portion is positioned inside in the tire width direction than an inside end in the tire width direction of the bead filler portion on a straight line passing through an inside end in the tire radial direction of the bead filler portion.

3. The tire according to claim 1 or 2, wherein the tip portion is positioned in an area from an inside end in the tire width direction of the bead structure to 30% of the overall width up to an outside end in the tire width direction of the bead structure.

4. The tire according to any one of claims 1 to 3, wherein the bead core is formed by coating the bead cord with a resin material.
